# EUROPEAN PATENT SPECIFICATION

(11) **EP 0 371 454 B1**
(45) Date of publication and mention of the grant of the patent: **09.06.1993**
(21) Application number: 89121931.3
(22) Date of filing: 28.11.1989
(51) Int. Cl.: B60P 1/44

(54) **A lifting platform**
Hebbare Ladeplattform
Pont élévateur

(30) Priority: 30.11.1988 FI 885565
(43) Date of publication of application: 06.06.1990
(73) Proprietor: Focolift Oy, SF-25501 Perniö (FI)
(72) Inventor: Merikanto, Jukka, SF-25500 Perniö (FI); Viitaniemi, Tapani, SF-20780 Kaarina (FI); Havola, Pekka, SF-21600 Parainen (FI)
(74) Representative: Bockhorni, Josef, Dipl.-Ing.

(56) References cited:
- DE-A- 1 680 187

## Description

The invention relates to a lifting platform to be attached to a vehicle and arranged to be raised and lowered vertically and pivoted about a horizontal axis by means of lifting and pivoting means, the lifting platform comprising a frame provided with lugs for the lifting and pivoting means, material filling the empty spaces within the frame, and an enclosure part made of glass fibre or other fibre material and resin, the enclosure part surrounding the whole structure.

At present, various lifting platforms are in general use. In trucks lifting platforms are used as side and back lifts, for instance. Most prior art lifting platforms are made of metal, such as steel. To provide light weight, lifting platforms have also been manufactured of light metal.

A drawback of industrially produced lifting platforms is that they have poor sound and thermal insulation properties. For this reason, it has in some cases been necessary to use insulated additional doors or the like in connection with lifting platforms made of metal. Such additional elements, however, easily increase the cost and the weight of the platform structures, which can be regarded as a drawback.

To improve the insulation properties and to reduce the weight, solutions differing from the above technique have been developed. One example of such solutions is the solution disclosed in EP-A-0182773, in which the frame of the platform is made of wood. Plastic material, such as polyurethane, is provided in the empty spaces within the frame to serve as an insulation. The wooden frame is further provided with metal reinforcements for the lugs of the lifting and pivoting means. The structure made of wood and plastic is covered with a plastic layer reinforced with glass fibre.

A drawback of this prior art solution is its complicated construction, as the wooden frame is the only load-bearing structure and therefore has to be sufficiently steady. The purpose of the plastic material is solely to act as an insulation. The complexity is further aggravated by the use of several different materials and the provision of separate metal reinforcements at the lug connection points.

The object of the present invention is to provide a lifting platform by means of which the drawbacks of the prior art can be eliminated. This is achieved by means of a platform according to the invention, which is characterized in that the frame extends only partly in the direction of the length of the lifting platform and occupies only a fraction of the total volume of the lifting platform, whereby the free end of the platform is frameless and most of the volume of the lifting platform being occupied by an integral composite construction formed by glass fibre or other fibre material, resin, and a core structure, so that a seamless construction composed of glass fibre or other fibre material and resin also encloses the frame, simultaneously adhering to the frame and forming an integral power transmission construction with the frame and that the integral completely seamless construction composed of glass fibre or some other fibre material and resin covers the upper, lower and edge surfaces of the lifting platform.

The lifting platform of the invention has the advantages of having simple construction, good strength and good insulating properties, low weight and even outer surfaces. Due to the simple construction, the platform is rapid to manufacture at low costs. Even outer surfaces enable easy cleaning, which is of particularly great importance in connection with back lifts.

In the following the invention will be described in greater detail by means of a preferred embodiment shown in the attached drawing, wherein
Figure 1 shows a frame for a lifting platform of the invention;
Figure 2 is a general view of the manufacturing stage of the lifting platform of the invention;
Figure 3 is a bottom view of the lifting platform of the invention;
Figure 4 is a sectional view along the line defined by the arrows IV - IV in Figure 3;
Figures 5 to 7 are sectional views along the lines defined by the arrows V - V, VI - VI and VII - VII in Figure 3, respectively; and
Figure 8 is a general perspective view of the lifting platform of the invention.

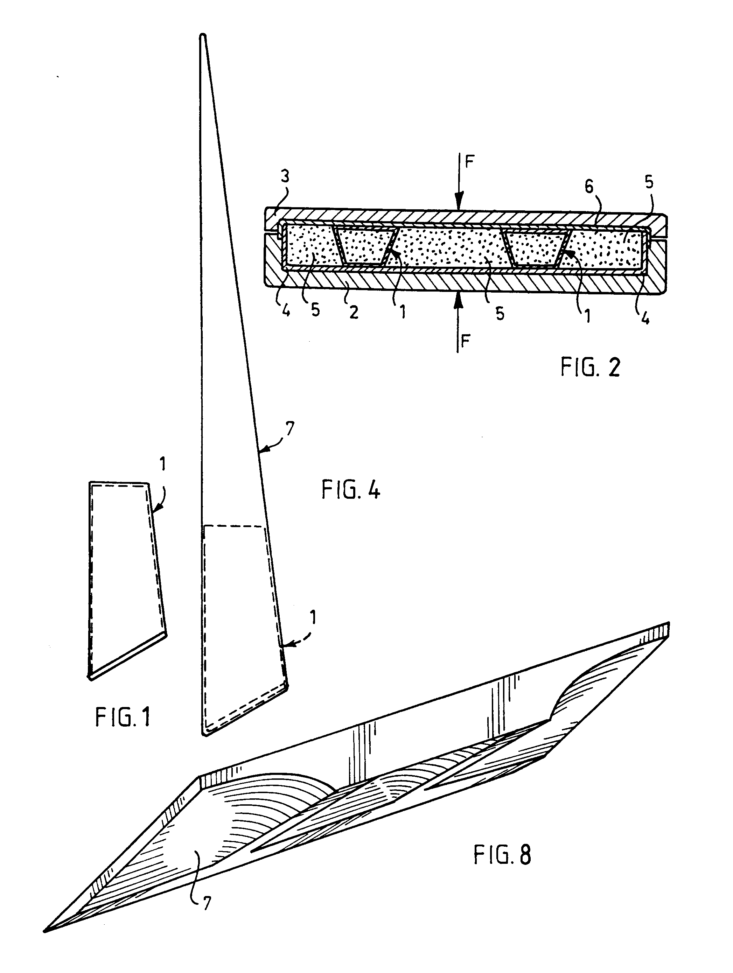

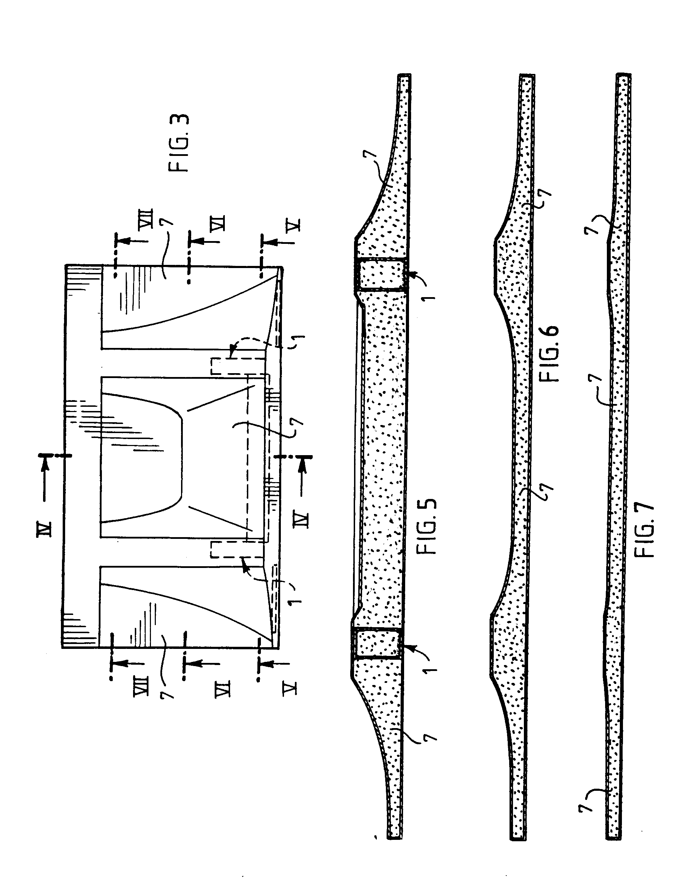

Figure 1 shows a frame 1 for the lifting platform of the invention. The frame 1 can be made of metal. The manufacture of the frame is a prior art technique, which will not be described more closely herein. The frame 1 is shown by broken lines also in Figure 3.

Figure 2 illustrates generally the manufacture of the lifting platform of the invention. In Figure 2, mould halves are indicated with the reference numerals 2 and 3. The mould halves 2, 3 are manufactured by means of a model having the shape of the final product.

At the manufacturing stage, mats or reinforcements 4 of glass fibre, for instance, are fitted first in the mould, that is, in its lower half 2, then the frame 1, a core structure 5 of a material such as polyurethane, and finally mats 6 of glass fibre, for instance. The mats 4, 6 are fitted in place so that they will surround the construction fitted within the mould on all sides. In place of glass fibre, other fibre materials can be used, such as kevlar or carbon fibre. The core structure need not be such as described above. Materials suited for the core structure include PVC foam, balsa, pultrusion rods, reinforced plastic or a combination of these materials.

At the following stage, the mould is closed by means of a press, for instance. In Figure 2, this is indicated with the reference F. After the mould has been closed, resin in pumped into the mould. After hardening (hardening time may be, e.g., 30 min), the mould is opened and the edges are finished, whereby a product such as shown in Figures 3 to 8 is obtained. Lugs can also be fastened to the products at this stage.

The manufacturing process has been described above by way of example and merely in outline. It is to be understood that a technique best suited for the purpose is used in each particular case. If required, plastic material may be fitted within the different parts of the frame to ensure that the frame stays in place, etc.

Essential in the lifting platform of the invention is that the frame itself is very small, occupying only a fraction of the total volume of the lifting platform while most of the volume of the lifting platform is occupied by an integral composite construction consisting of glass fibre or some other fibre material, resin and the core structure. The composite construction is indicated with the reference numeral 7 in the figures. The frame can be made of metal, for instance.

The basic idea of the invention is that the different layers of the lifting platform form an integral sandwich construction resistant to bending. This is achieved in that the construction composed of glass fibre or some other fibre material, and resin, in Figure 2 the portions indicated with the reference numerals 4 and 6, encloses not only the core structure 5 but also the frame 1, adhering to both of them. The construction is thus integral with the frame, forming with it a power transmission construction. On account of the way of manufacture the construction composed of glass fibre or other fibre material and resin is completely seamless and integral, so that it covers the upper and lower surfaces as well as all edge surfaces of the lifting platform in the form of a seamless integral layer.

As mentioned above, the frame 1 occupies only a fraction of the total volume of the lifting platform. It has proved particularly advantageous to construct the frame 1 so that it extends in the direction of the length of the lifting platform over no more than 30% of the distance between the front and back edges of the platform and in the direction of the width of the platform at each lug over no more than 20% of the width of the platform.

To increase the strength of the structure, it is preferable to provide power transmission bridges on the surfaces of the different parts of the lifting platform, such as the frame 1, to improve the adhesive properties. The adhesive properties can be improved, e.g., by wrapping the frame in a cloth of glass fibre, into which the resin to be introduced into the mould is absorbed.

As appears from the figures, the outer surfaces of the lifting platform of the invention are very even and completely seamless, wherefore the surfaces are easy to clean. The evenness of the outer surfaces is particularly clearly to be seen in Figures 5 to 8.

The embodiment described above is by no means intended to restrict the invention but the invention can be modified within the scope of the claims as desired. Accordingly, it is obvious that the lifting platform of the invention or its parts need not be exactly similar to those shown in the figures but other solutions are possible as well. The size and shape of the frame may vary. The figures do not at all show the lugs for the lifting means as in this particular embodiment the lugs are fastened to the frame after the manufacture of the platform. The lugs can, of course, also be made integral with the frame. In this case, the lugs are left outside the mould cavity during the manufacture. In an extreme case, the entire frame can be formed by lugs, whereby the lugs are positioned in the mould in such a manner that the lug ends protrude outside the mould while the other ends, that is, the ends fastening them to the platform, extend within the mould cavity. The frame can be made of some other material than metal, such as fibre materials. The working surface of the lifting platform, that is, the surface supporting the objects on the platform, can be shaped in any way by means of the mould. The surface may be even or it may be grained, etc. The lifting platform of the invention can be fitted in any vehicle, such as a car, a vessel, a plane, a forest tractor, etc.

## Claims

1. A lifting platform to be attached to a vehicle and arranged to be raised and lowered vertically and pivoted about a horizontal axis by means of lifting and pivoting means, the lifting platform comprising a frame provided with lugs for the lifting and pivoting means, material filling the empty spaces within the frame, and an enclosure part made of glass fibre or other fibre material and resin, the enclosure part surrounding the whole structure, **characterized** in that the frame (1) extends only partly in the direction of the length of the lifting platform and occupies only a fraction of the total volume of the lifting platform, whereby the free end of the platform is frameless and most of the volume of the lifting platform being occupied by an integral composite construction (7) formed by glass fibre or other fibre material, resin, and a core structure, so that a seamless construction composed of glass fibre or other fibre material and resin also encloses the frame (1), simultaneously adhering to the frame (1) and forming an integral power transmission construction with the frame (1) and that the integral completely seamless construction composed of glass fibre or some other fibre material and resin covers the upper, lower and edge surfaces of the lifting platform.

2. A platform according to claim 1, **characterized** in that the frame (1) extends in the direction of the length of the lifting platform over no more than 30% of the distance between the front and back edges of the platform and in the direction of the width of the platform at each lug over no more than 20% of the width of the platform.

3. A platform according to claim 1 or 2, **characterized** in the provision of power transmission bridges on the surfaces of the different parts of the lifting platform to improve their adhesive properties.

4. A platform according to any of the preceding claims, **characterized** in that the frame (1) is made of metal.

## Patentansprüche

1. Hebbare Ladeplattform zur Befestigung an einem Fahrzeug, die derart angeordnet ist, daß sie mittels einer Hub- und Schwenkeinrichtung vertikal anheb- und absenkbar und um eine horizontale Achse schwenkbar ist, wobei die Plattform einen mit Ansätzen für die Hub- und Schwenkeinrichtung versehenen Rahmen, ein die Leerräume innerhalb des Rahmens füllendes Material und einen Mantelteil aufweist, welcher aus Glasfaser oder einem anderen Fasermaterial und Kunstharz hergestellt ist und die Gesamtstruktur umgibt, **dadurch gekennzeichnet,** daß der Rahmen (1) sich nur teilweise in Richtung der Länge der Ladeplattform erstreckt und nur einen Teil des Gesamtvolumens der Ladeplattform einnimmt, wobei das freie Ende der Plattform rahmenlos ist und das meiste des Volumens durch eine integrale Verbundkonstruktion (7) eingenommen ist, die durch Glasfaser oder ein anderes Fasermaterial, Kunstharz und einen Kern gebildet ist, so daß ein nahtloser Aufbau aus Glasfaser oder anderem Fasermaterial und Kunstharz ebenfalls den Rahmen (1) umgibt, gleichzeitig am Rahmen (1) anhaftet und eine integrale Kraftübertragungskonstruktion mit dem Rahmen (1) bildet und daß die integrale völlig nahtfreie Konstruktion bestehend aus Glasfaser oder irgendeinem anderen Fasermaterial und Kunstharz die oberen, unteren und Randflächen der Ladeplattform überdeckt.

2. Plattform nach Anspruch 1, **dadurch gekennzeichnet,** daß der Rahmen (1) sich in Richtung der Länge der Ladeplattform über nicht mehr als 30% des Abstandes zwischen den vorderen und den hinteren Rändern der Plattform und sich in Richtung der Breite der Plattform an jedem Ansatz über nicht mehr als 20% der Breite der Plattform erstreckt.

3. Plattform nach Anspruch 1 oder 2, **dadurch gekennzeichnet,** daß Kraftübertragungsbrücken auf den Oberflächen der verschiedenen Teile der Ladeplattform vorgesehen sind, um deren Haftungseigenschaften zu verbessern.

4. Plattform nach einem der vorhergehenden Ansprüche, **dadurch gekennzeichnet,** daß der Rahmen (1) aus Metall gebildet ist.

## Revendications

1. Pont élévateur devant être fixé à un véhicule et disposé de manière à être soulevé et abaissé verticalement et pivoté autour d'un axe horizontal à l'aide de moyens de soulèvement et de pivotement, le pont élévateur comprenant un bâti comportant des pattes pour des moyens de soulèvement et de pivotement, un matériau remplissant les espaces vides dans le bâti et une partie d'enveloppe constituée de fibres de verre ou d'un autre matériau en fibres et de résine, la partie d'enveloppe entourant toute la structure, caractérisé en ce que le bâti (1) ne s'étend que partiellement dans la direction de la longueur du pont élévateur et n'occupe qu'une fraction du volume total du pont élévateur, de manière que l'extrémité libre du pont soit dépourvue de bâti et que la plupart du volume du pont élévateur soit occupé par une construction composite intégrale (7) formée de fibres de verre ou d'un autre matériau en fibres, de résine et d'une structure de noyau, afin qu'une construction sans soudure constituée de fibres de verre ou d'un autre matériau en fibres et de résine, enferme également le bâti (1), en adhérant simultanément au bâti (1) et en formant une construction de transmission de puissance intégrale avec le bâti (1) et que la construction totalement sans soudure et intégrale, constituée de fibres de verre ou de tout autre matériau en fibres, et de résine recouvre les surfaces supérieure, inférieure et des bords du pont élévateur.

2. Pont élévateur selon la revendication 1 caractérisé en ce que le bâti (1) s'étend dans la direction de la longueur du pont élévateur sur pas plus de 30% de la distance entre les bords frontaux et postérieurs du pont et dans la direction de la largeur du pont sur chaque patte, sur pas plus de 20% de la largeur de pont.

3. Pont élévateur selon la revendication 1 ou 2, caractérisé en ce que l'on prévoit des ponts de transmission de puissance sur les surfaces des différentes parties du pont élévateur pour améliorer leur propriétés adhésives.

4. Pont élévateur selon l'une quelconque des revendications précédentes caractérisé en ce que le bâti (1) est fait de métal.
